# EUROPÄISCHE PATENTSCHRIFT

(11) **EP 0 867 962 B1**
(45) Veröffentlichungstag und Bekanntmachung des Hinweises auf die Patenterteilung: **17.01.2001**
(21) Anmeldenummer: 98103995.1
(22) Anmeldetag: 06.03.1998
(51) Int. Cl.: H01M 8/06, C01B 3/32, B01J 8/02

(54) **Zweistufiger Reformierungsreaktor zur Wasserdampfreformierung von Methanol**
Two-stage reformer for steam reforming of methanol
Réacteur de reformage à vapeur d'eau à deux étages, pour le reformage de méthanol

(30) Priorität: 29.03.1997 DE 19713242
(43) Veröffentlichungstag der Anmeldung: 30.09.1998
(73) Patentinhaber: XCELLSIS GmbH, 73230 Kirchheim / Teck-Nabern (DE)
(72) Erfinder: Autenrieth, Rainer, 89155 Erbach (DE)
(74) Vertreter: Kocher, Klaus-Peter Dipl.-Phys

(56) Entgegenhaltungen:
- EP-A- 0 813 903
- EP-A- 0 814 054
- DE-A- 4 420 752
- US-A- 5 401 589
- PATENT ABSTRACTS OF JAPAN vol. 013, no. 124 (C-580), 27.März 1989 & JP 63 295403 A (ASAHI ENG KK), 1.Dezember 1988,
- PATENT ABSTRACTS OF JAPAN vol. 010, no. 120 (C-343), 6.Mai 1986 & JP 60 246202 A (TOUYOU ENGINEERING KK), 5.Dezember 1985,

## Beschreibung

Die Erfindung bezieht sich auf einen Reformierungsreaktor zur Wasserdampfreformierung von Methanol, der sich insbesondere auch für mobile Anwendungen eignet, speziell zur Bereitstellung von Wasserstoff für die Brennstoffzellen eines brennstoffzellenbetriebenen Kraftfahrzeuges.

Es sind bereits zahlreiche verschiedene Typen von ein- und mehrstufigen Reformierungsreaktoren zur Wasserdampfreformierung von Methanol vorgeschlagen worden. So ist in der Patentschrift US 5.401.589 ein dreistufiger Reaktor offenbart, bei dem ein mit einer durchgehenden Katalysatorschüttung gefüllter Reaktionsraum vorgesehen ist, der in drei untereinanderliegende Reaktorstufen unterteilt ist, die auf unterschiedlichen Temperaturen gehalten werden, und zwar die eintrittsseitige, obere Stufe auf ca. 300°C, die mittlere Stufe auf ca. -275°C und die ausgangsseitige, untere Stufe auf ca. 125°C.

Bei einem in der Offenlegungsschrift JP 63-295403 (A) offenbarten Reaktor wird das zu reformierende Gasgemisch in einen Gaseinlaßraum eines Reaktorgehäuses eingeleitet, von wo es einer ersten, unbeheizten Reaktorstufe mit eigener Katalysatorschüttung zugeführt wird, die von einer gasdurchlässigen Platte getragen wird und das gesamte Volumen dieser Stufe ausfüllt. In dieser Stufe findet eine partielle Reformierung mittels einer adiabatischen Reaktion statt. An die erste Stufe schließt sich im Reaktorgehäuse nach unten unter Belassung eines gewissen Zwischenraums eine zweite Stufe an, die beheizt wird und zu diesem Zweck als Wärmeübertragerstruktur mit beheizten Reaktionskanälen ausgelegt ist, die mit einer von derjenigen der ersten Stufe getrennten Katalysatorschüttung befüllt sind. In dieser Stufe findet eine isotherme Reformierungsreaktion statt. An die zweite Stufe schließt sich nach unten ein Gasauslaßraum an, der mit Katalysatormaterial befüllt ist, welches mit demjenigen der zweiten Stufe eine durchgehende Katalysatorschüttung bildet.

Aus den Offenlegungsschriften JP 60-246202 (A) und JP 1-5901 (A) sind zweistufige Reaktoren bekannt, bei denen die beiden Reaktorstufen in einem gemeinsamen Reaktorgehäuse untereinander angeordnet sind und mit einer durchgehenden Katalysatorschüttung befüllt sein können. Bei diesen bekannten Reaktoren werden beide Stufen beheizt und beinhalten zu diesem Zweck als Wärmeübertragerstruktur aufgebaut und an einen jeweiligen Heizkreislauf angeschlossen.

Bei einem weiteren bekannten Typ eines zweistufigen Reaktors zur Wasserdampfreformierung von Methanol sind die beiden Stufen in je einem eigenen Gehäuse untergebracht, wobei dazwischen eine Kühleinrichtung vorgesehen sein kann, wie in der Patentschrift US 5.221. 524 beschrieben.

Aus der Offenlegungsschrift DE 44 20 752 A1 ist ein weiterer zweistufiger Reaktor zur Wasserdampreformierung von Methanol beschrieben, bei dem die erste Stufe auf eine Temperatur von vorzugsweise 250°C bis 350°C gebracht wird und die zweite Stufe zwecks Verringerung des CO-Gehalts des in der ersten Stufe erzeugten Reaktionsgases bei niedrigerer Temperatur nur schwach beheizt oder adiabat betrieben wird. In den beiden Reaktorstufen werden vorzugsweise unterschiedliche, für den jeweiligen Prozeß optimierte Katalysatormaterialien verwendet. Beide Reaktorstufen können in einer gemeinsamen Anordnung integriert sein. Jeder der beiden Reaktorstufen sind eigene Beheizungsmittel in Form jeweiliger Heizkanäle und zugehöriger Heizfluid-Zuleitungen und -Abführungen zugeordnet, um die betreffende Reaktorstufe mit einem hindurchgeleiteten Wärmeträgermedium beheizen zu können.

Der Erfindung liegt als technisches Problem die Bereitstellung eines Reformierungsreaktors zur Wasserdampfreformierung von Methanol zugrunde, der vergleichsweise einfach aufgebaut ist und sich speziell auch für mobile Anwendungen und die dort häufig auftretenden Lastschwankungen eignet.

Die Erfindung löst dieses Problem durch die Bereitstellung eines Reformierungsreaktors mit den Merkmalen des Anspruchs 1. Der Reaktor ist zweistufig ausgelegt, wobei die beiden Reaktorstufen in einem gemeinsamen Reaktorgehäuse angeordnet und mit einer durchgehenden Katalysatorschüttung befüllt sind. Charakterisischerweise wird nur eine der beiden Reaktorstufen beheizt, während die andere unbeheizt bleibt, wozu nur ersterer entsprechende Beheizungsmittel zugeordnet sind. Für die andere Reaktorstufe sind keine Beheizungsmittel vorgesehen. Es zeigt sich, daß durch einen solchen Reaktoraufbau die Anforderungen beim mobilen Einsatz, wie geringer Konstruktionsaufwand, kompakter Aufbau und zuverläsiger Reformierungsbetrieb auch bei merklichen Lastschwankungen, in zufriedenstellender Weise erfüllt werden. Dabei bleibt der Realisierungsaufwand geringer als für dreistufige Reaktoren oder zweistufige Reaktoren mit Beheizung beider Stufen.

Bei einem nach Anspruch 2 weitergebildeten Reaktor bleibt die erste Stufe unbeheizt und dient dadurch als Vorreformierungsstufe, in welcher der durchgeführte Gasstrom partiell reformiert wird, während die zweite Stufe einen Wärmeübertrageraufbau besitzt und beheizt wird, um die Reformierungsreaktion für das partiell reformierte Gas aus der ersten Stufe zu vervollständigen. Da ein Teil der Reformierungsreaktion bereits in der ersten Stufe stattfindet, kann die zweite Stufe entsprechend kleiner dimensioniert werden. Wenn der Reaktor so angeordnet ist, daß Katalysatormaterial aus der ersten Stufe in die zweite Stufe nachrutschen kann, kann dadurch einer alterungsbedingten Aktivitätsabnahme des Katalysatormaterials in der zweiten Stufe entgegengewirkt werden. Zudem kann das Katalysatormaterial der ersten Stufe als Filter wirken, was einen separaten Filter zum Ausfiltern von Schwebepartikeln oder Wasser- und Methanoltropfen überflüssig macht, ohne daß ein vorgeschalteter Verdampfer die Tropfenfreiheit des aus ihm austretenden Gasstroms gewährleisten muß.

Bei einem nach Anspruch 3 weitergebildeten Reaktor bleibt die zweite Stufe unbeheizt, während die erste Stufe beheizt wird und dazu einen Wärmeübertrageraufbau besitzt. Die unbeheizte zweite Stufe kann bei diesem Reaktor als sogenannte Shiftstufe wirken, in welcher der Anteil an Kohlenmonoxid im wasserstoffreichen Reformat aus der ersten Stufe durch Oxidation in Kohlendioxid verringert wird. Zudem kann die Wärme der exothermen Shiftreaktion die endotherme Methanolreformierung unterstützen.

In Weiterbildung des Reaktors mit beheizter erster und unbeheizter zweiter Stufe wird gemäß Anspruch 4 beim Reaktoraufbau das Volumenverhältnis der beiden Reaktorstufen als Funktion der für die Reformierungsreaktion in der ersten Stufe gewählten Temperatur eingestellt, und zwar wird das Volumen der zweiten Stufe im Verhältnis zu demjenigen der ersten Stufe umso größer gewählt, je höher die gewählte Reformierungsreaktionstemperatur in der ersten Stufe ist. Es zeigt sich, daß durch diese Optimierung von Reaktionstemperatur und Reaktoraufbau bei gegebenem Reformierungsumsatz ein minimales Gesamtvolumen für beide Reaktorstufen erzielbar ist, so daß sich der Reaktor dementsprechend klein bauen läßt.

Bei einem nach Anspruch 5 weitergebildeten Reaktor ist ein katalysatorfreier Gaseinlaßraum vor der ersten Stufe und/oder ein katalysatorfreier Gasauslaßraum hinter der zweiten Stufe vorgesehen. Diese Maßnahme verbessert das dynamische Verhalten des Reaktors, da sich dadurch der Druckabfall über den Reaktor verringern läßt und somit das "Aufpumpen" des Systems bei Lastwechsel verringert wird.

Bei einem nach Anspruch 6 weitergebildeten Reaktor sind die beiden Reaktorstufen von übereinanderliegenden Abschnitten eines durchgehend mit der Katalysatoschüttung befüllten Reaktionsraums gebildet. Dadurch können Setzungserscheinungen der Katalysatorschüttung in der unteren Stufe automatisch kompensiert werden.

Vorteilhafte Ausführungsformen der Erfindung sind in den Zeichnungen dargestellt und werden nachfolgend beschrieben. Hierbei zeigen:
- Fig. 1: eine schematische Längsschnittansicht eines zweistufigen Reformierungsreaktors zur Wasserdampfreformierung von Methanol mit unbeheizter erster und beheizter zweiter Stufe sowie einem durchgehenden Wärmeübertrageraufbau,
- Fig. 2: eine schematische Längsschnittansicht eines zweistufigen Reformierungsreaktors zur Wasserdampfreformierung von Methanol mit unbeheizter erster und beheizter zweiter Stufe und mit einem auf die zweite Stufe beschränkten Wärmeübertrageraufbau und
- Fig. 3: eine schematische Längsschnittansicht eines zweistufigen Reformierungsreaktors zur Wasserdampfreformierung von Methanol mit beheizter erster und unbeheizter zweiter Stufe sowie einem auf die erste Stufe beschränkten Wärmeübertrageraufbau.

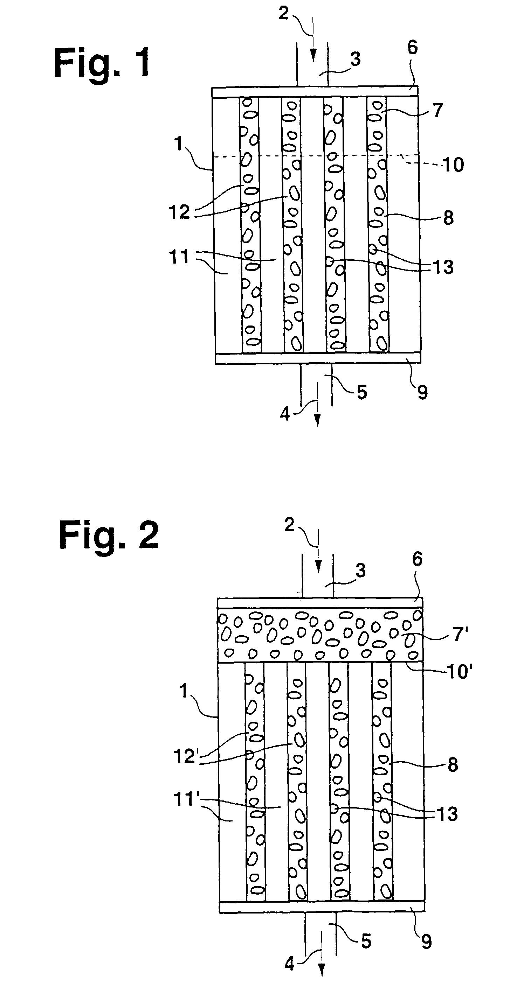

Der in Fig. 1 schematisch dargestellte Reformierungsreaktor zur Wasserdampfreformierung von Methanol beinhaltet ein Reaktorgehäuse 1, in welches ein zu reformierendes, von einem nicht gezeigten, vorgeschalteten Verdampfer kommendes Gasgemisch 2 über einen Einlaß 3 eingespeist wird. Das durch die Methanolreformierungsreaktion entstehende Reformat 4 verläßt das Reaktorgehäuse 1 über einen Auslaß 5, welcher auf der dem Einlaß 3 gegenüberliegenden Gehäuseseite angeordnet ist. In Gasströmungsrichtung sind im Reaktorgehäuse 1 nacheinander ein schmaler Gaseinlaßraum 6, eine erste, unbeheizte Reaktorstufe 7, eine zweite, beheizte Reaktorstufe 8 und ein schmaler Gasauslaßraum 9 vorgesehen.

Die erste und die zweite Reaktorstufe 7, 8 besitzen einen durchgehenden Wärmeübertrageraufbau, von dem jedoch nur der zur zweiten Stufe 8 gehörige Teil zur Beheizung dieser Stufe 8 genutzt wird. Die erste und die zweite Stufe 7, 8 grenzen auf Höhe einer in Fig. 1 gestrichelt gezeichneten Linie 10 aneinander an. Durch geeignete, nicht gezeigte Mittel, z.B. Einbringen einer thermisch isolierenden Zwischenplatte, ist dafür gesorgt, daß ein Heizmedium, welches durch Heizkanäle 11 des Wärmeübertrageraufbaus in der zweiten Reaktorstufe 8 zwecks Beheizung derselben hindurchgeleitet wird, nicht in den Bereich der ersten Stufe 7 gelangt, die folglich unbeheizt bleibt. Als aktive Reaktionsräume dienen Reaktionskanäle 12 des Wärmeübertrageraufbaus, die in der zweiten Stufe 8 in Wärmekontakt mit den Heizkanälen 11 stehen. Die Reaktionskanäle 12 erstrecken sich durchgehend zwischen dem Gaseinlaßraum 6 und dem Gasauslaßraum 9 und sind vollständig mit einer Schüttung 13 eines geeigneten Katalysatormaterials, z.B. eines Cu/ZnO/Al₂O₃-Materials, befüllt. Der Gaseinlaßraum 6 und der Gasauslaßraum 9 bleiben hingegen frei von Katalysatormaterial.

Im Betrieb des Reaktors erfolgt in der ersten Stufe 7 eine teilweise Reformierung des über den Gaseinlaßraum 6 gleichmäßig in die Reaktionskanäle 12 eingeleiteten Gasgemischs. Im allgemeinen ist dieser Teilumsatz wegen der fehlenden Beheizung der ersten Stufe 7 deutlich geringer als der restliche Umsatz in der zweiten Stufe 8, die durch die Beheizung auf einer zur Durchführung der endothermen Methanolreformierungsreaktion optimalen Temperatur gehalten wird. Denoch bewirkt der Teilumsatz in der ersten Stufe 7, daß die Wasser- und Methanol-Konzentration am Eintritt in die zweite Stufe 8 bereits verringert ist und dadurch die zweite Stufe 8 baulich entsprechend kleiner ausgelegt werden kann. Zudem verlangsamt sich die durch Kontakt mit Methanol und Wasser bedingte Alterung des Katalysatormaterials in der zweiten Stufe.

Die unbeheizte, erste Reaktorstufe 7 erfüllt außerdem eine Filterfunktion, indem sie Schwebepartikel sowie eventuelle Wasser- oder Methanoltropfen vor Erreichen der zweiten Reaktorstufe 8 ausfiltert. Ein Heißgasfilter vor dem Reaktor kann dadurch entfallen, und es muß für den vom Verdampfer kommenden Eduktgasstrom 2 keine Tropfenfreiheit gegeben sein, so daß sich der Verdampfer entsprechend einfacher bauen läßt. Das Eindringen solcher Tropfen in die zweite, den hauptsächlichen Reformierungsumsatz bewirkende zweite Stufe 8 ist unerwünscht, da sie zu Schädigungen des dortigen, hochaktiven Katalysatormaterials führen können.

Der Reaktor ist beispielsweise für den kostengünstigen Einsatz in einem brennstoffzellenbetriebenen Kraftfahrzeug geeignet, um dort den für die Brennstoffzellen benötigten Wasserstoff aus flüssig mitgeführtem Methanol zu erzeugen. Wird der Reaktor vertikal oder schräg so in das Fahrzeug eingebaut, daß die erste Reaktorstufe 7 über der zweiten Stufe 8 liegt, rutscht im Fall eines Schwunds an Katalysatormaterial in der zweiten Stufe 8 automatisch Katalysatormaterial aus der ersten Stufe 7 nach, d.h. die erste Stufe 7 wirkt als Katalysatorvorrat für die zweite Stufe 8. Die Nachlieferung von Katalysatormaterial kann bei andersartiger Reaktoreinbaulage gegebenenfalls auch durch geeignete Hilfsmittel erreicht werden, die das Katalysatormaterial der ersten Stufe 7 gegen dasjenige der zweiten Stufe 8 gedrückt halten. Auf diese Weise lassen sich Setzungserscheinungen der Katalysatorschüttung 12 in der zweiten Stufe 8, die z.B. durch Erschütterungen und Alterungserscheinungen bedingt sein können, automatisch kompensieren.

Eine weitere Funktion, welche die erste Reaktorstufe 7 erfüllt, besteht in der Dämpfung von Temperaturschwankungen des Eduktstroms 2, die bei Lastwechseln auftreten, wie sie beim Einsatz in Fahrzeugen typisch sind. Die unbeheizte erste Reaktorstufe 7 ist durch ihre Wärmekapazität und dadurch, daß sie den hindurchtretenden Gasstrom wegen des Teilumsatzes der endothermen Reformierungsreaktion abkühlt, in der Lage, diese Temperaturschwankungen weitgehend auszugleichen. Zu einem zufriedenstellenden dynamischen Verhalten des Reaktors im Betrieb auch bei merklichen Lastwechseln tragen zudem der Gaseinlaßraum 6 und der Gasauslaßraum 9 bei, die beide frei von Katalysatormaterial sind. Mit diesem Aufbau kann der Druckabfall für die durch den Reaktor geleitete Gasströmung verringert werden, was zu einem verminderten "Aufpumpen" des Systems bei Lastwechseln und damit zu einem verbesserten dynamischen Verhalten des Reaktors führt.

Der in Fig. 2 gezeigte Reaktor entspricht in seinem Aufbau weitgehend demjenigen von Fig. 1, wobei zur Verdeutlichung für funktionell gleiche Komponenten dieselben Bezugszeichen verwendet sind und insoweit auf die Beschrei-bung zu Fig. 1 verwiesen werden kann. Die einzig wesentliche Modifikation besteht darin, daß beim Reaktor von Fig. 2 nur die zweite Reaktorstufe 8 den Wärmeübertrageraufbau mit Heizkanälen 11' und Reaktionskanälen 12' besitzt, während eine erste, eintrittsseitige Reaktorstufe 7' ohne Wärmeübertragerstruktur vorgesehen ist, bei der das gesamte Volumen des betreffenden Abschnitts des Reaktorgehäuses 1 mit der Katalysatorschüttung befüllt ist und vom zugeführten Gasgemisch 2 durchströmt wird. Die damit einen einheitlichen, katalysatorbefüllten Hohlkörper bildende erste Reaktorstufe 7' ist durch eine thermisch isolierende Trennwand 10' von den Heizkanälen 11' der zweiten Reaktorstufe 8 getrennt, wobei die Reaktionskanäle 12' der zweiten Stufe 8 über entsprechend eingebrachte Öffnungen der Trennwand 10' mit der ersten Reaktorstufe 7' in Verbindung stehen.

Der Reaktor von Fig. 2 besitzt dieselben, speziell für mobile Anwendungen vorteilhaften Eigenschaften, wie sie oben zum Reaktor von Fig. 1 erläutert wurden, worauf verwiesen werden kann. Typische Betriebstemperaturen der zweiten, beheizten Reaktorstufe 8 zur Bewirkung der hauptsächlichen Methanolreformierungsreaktion liegen zwischen etwa 280°C und etwa 350°C.

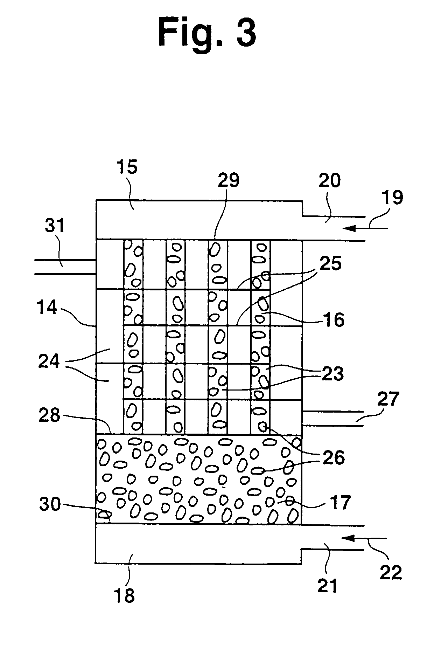

Der in Fig. 3 dargestellte Reaktor beinhaltet ein Reaktorgehäuse 14 mit einem schmalen Gaseinlaßraum 15, einer beheizten, ersten Reaktorstufe 16, einer unbeheizten, zweiten Reaktorstufe 17 und einem schmalen Gasauslaßraum 18, die in Gasströmungsrichtung hintereinanderliegend angeordnet sind. Ein zu reformierendes Methanol/Wasser-Gasgemisch 19 wird über einen seitichen Einlaß 20 in den Gaseinlaßraum 15 eingeleitet und von dort in die erste Reaktorstufe 16 eingespeist. In dieser Stufe 16 findet der hauptsächliche Reformierungsumsatz statt, wozu sie auf einer zur Durchführung der endothermen Methanolreformierungsreaktion geeigneten Temperatur gehalten wird, z.B. zwischen etwa 280°C und 350°C. Das in der ersten Stufe 16 weitestgehend vollständig reformierte Gasgemisch durchströmt dann die unbeheizte zweite Reaktorstufe 17, die dadurch als Shiftstufe wirkt, in welcher der Anteil von im reformierten Gas enthaltenem Kohlenmonoxid durch Umwandlung in Kohlendioxid verringert wird. Über einen seitlichen Auslaß 21 tritt dadurch ein Reformatgasstrom 22 aus dem Gasauslaßraum 18 aus, der weitestgehend aus Wasserstoff besteht und allenfalls noch einen sehr geringen Kohlenmonoxidanteil aufweist, wie dies z.B. zur Verwendung in Brennstoffzellen erwünscht ist.

Für die erste, beheizte Reaktorstufe 16 ist ein Wärmeübertrageraufbau gewählt, der Reaktionskanäle 23 und Heizkanäle 24 beinhaltet, wobei sich die Reaktionskanäle 23 zwischen dem Gaseinlaßraum 15 und der zweiten Reaktorstufe 17 erstrecken. Die Heizkanäle 24 bilden unter Verwendung geeigneter Umlenkbleche 25 einen mäanderförmigen Strömungspfad durch die zweite Reaktorstufe 16 hindurch von einem Heizmediumeinlaß 31, der nahe des Gaseinlaßraums 15 in die erste Reaktorstufe 16 mündet, zu einem Heizmediumauslaß 27, der in der Nähe der zweiten Reaktorstufe 17 aus der ersten Stufe 16 ausmündet.

Die zweite Reaktorstufe 17 bildet hingegen einen einheitlichen Hohlraum, der gemeinsam mit den mit ihm in Verbindung stehenden Reaktionskanälen 23 der ersten Stufe 16 mit einer Katalysatorschüttung 26 befüllt ist. Eine zwischen der ersten Stufe 16 und der zweiten Stufe 17 vorgesehene, bei Bedarf thermisch isolierende Trennwand 28 besitzt entsprechende Öffnungen, welche die Verbindung zwischen den Reaktionskanälen 23 und dem Volumen der zweiten Stufe 17 herstellen, und sorgt im übrigen für eine Trennung der zweiten Stufe 17 gegenüber den Heizkanälen 24 der ersten Stufe 16. Zwei Katalysatorrückhaltegitter 29, 30 begrenzen die Katalysatorschüttung 26 auf die beiden Reaktorstufen 16, 17 und verhindern ein Austreten von Katalysatormaterial in den Gaseinlaßraum 15 und den Gasauslaßraum 18, wie dies analog auch bei den Reaktoren der Fig. 1 und 2 der Fall ist.

Die Gestaltung der zweiten Reaktorstufe 17 als einheitlicher, katalysatorbefüllter Hohlkörper ermöglicht es, dort bei gegebener Baulänge vergleichsweise viel Katalysatormaterial unterzubringen. Dies begünstigt die Reaktionskinetik, da für einen bestimmten Reaktionsumsatz bei den niedrigeren Temperaturen der zweiten Stufe 17 mehr Katalysatormaterial benötigt wird als bei höheren Temperaturen, wie sie z.B. in der ersten Stufe 16 gegeben sind. Die in der zweiten Stufe 17 stattfindende exotherme Shiftreaktion erzeugt Wärme, die zusammen mit dem reichlich vorhandenen Katalysatormaterial einen vollständigen Umsatz von ggf. in der ersten Stufe 16 noch nicht reformierten Gasanteilen innerhalb der zweiten Stufe 17 parallel zur Shiftreaktion sicherstellt. Durch ihre Shiftwirkung begünstigt die zweite Reaktorstufe 17 zudem die Erzielung einer gleichmäßig geringen Kohlenmonoxidkonzentration im Reformatgasstrom 22 über den gesamten Lastbereich hinweg.

Bei der Dimensionierung des Reaktors ist zum einen von Bedeutung, daß der Gaseinlaßraum 15 und der Gasauslaßraum 18 mit den oben erwähnten Vorteilen hinsichtlich des dynamischen Reaktorbetriebsverhaltens bei Lastwechseln vorgesehen sind und dabei nur so groß wie zur Bewirkung dieses Dynamikverhaltens erforderlich gestaltet sind, um das Bauvolumen des Reaktorgehäuses 14 möglichst gering zu halten. Des weiteren ist für einen möglichst kompakten Aufbau des Reaktors die Größe, d.h. das Volumen, der zweiten Reaktorstufe 17 auf diejenige der ersten Reaktorstufe 16 abhängig von der Betriebstemperatur in der ersten Stufe 16 abgestimmt, d.h. das Verhältnis des Volumens der ersten Stufe 17 zu demjenigen der zweiten Stufe 16 wird als Funktion der für die erste Stufe 16 beabsichtigten Betriebstemperatur festgelegt. Beispielsweise beträgt das Volumen der zweiten Stufe 17 bei einer Betriebstemperatur der ersten Stufe 16 von ca. 280°C ungefähr 30% des Volumens der ersten Stufe 16. Mit höherer Temperatur wird das Volumen der zweiten Stufe 17 relativ zu demjenigen der ersten Stufe 16 erhöht. Durch diese optimale Abstimmung der Größen- und Temperaturverhältnisse zwischen der ersten Stufe und der zweiten Stufe 17 ergibt sich bei gegebenem Reformierungsumsatz ein geringerer Reaktorbauraumbedarf als bei davon abweichenden Reaktorstrukturen.

## Patentansprüche

1. Reformierungsreaktor zur Wasserdampfreformierung von Methanol, der zweistufig mit einer ersten, eintrittsseitigen Reaktorstufe (7) und einer an diese in Gasströmungsrichtung direkt anschließenden zweiten, austrittsseitigen Reaktorstufe (8) ausgelegt ist, wobei die beiden Reaktorstufen in einem gemeinsamen Reaktorgehäuse (1) untergebracht sind,
**dadurch gekennzeichnet, daß**
die beiden Reaktorstufen (7, 8) mit einer durchgehenden Katalysatorschüttung (13) befüllt sind und nur einer der beiden Reaktorstufen zur Beheizung genutzte Beheizungsmittel zugeordnet sind.

2. Reformierungsreaktor nach Anspruch 1, weiter
**dadurch gekennzeichnet, daß**
die erste Reaktorstufe (7, 7') unbeheizt bleibt und die zweite Reaktorstufe (8) einen Wärmeübertrageraufbau besitzt und beheizt wird.

3. Reformierungsreaktor nach Anspruch 1, weiter
**dadurch gekennzeichnet, daß**
die zweite Reaktorstufe (17) unbeheizt bleibt und die erste Reaktorstufe (16) beheizt wird und einen Wärmeübertrageraufbau besitzt.

4. Reformierungsreaktor nach Anspruch 3, weiter
**dadurch gekennzeichnet, daß**
das Verhältnis des Volumens der zweiten Reaktorstufe (17) zu demjenigen der ersten Reaktorstufe (16) auf eine beabsichtigte Betriebstemperatur in der ersten Reaktorstufe (16) abgestimmt ist, wobei es mit wachsender beabsichtigter Betriebstemperatur größer werdend festgelegt ist.

5. Reformierungsreaktor nach einem der Ansprüche 1 bis 4, weiter
**dadurch gekennzeichnet, daß**
den beiden Reaktorstufen (7, 8) in dem gemeinsamen Reaktorgehäuse (1) ein katalysatorfreier Gaseinlaßraum (6) vorgeschaltet und/oder ein katalysatorfreier Gasauslaßraum (9) nachgeschaltet ist.

6. Reformierungsreaktor nach einem der Ansprüche 1 bis 5, weiter
**dadurch gekennzeichnet, daß**
die beiden Reaktorstufen (7, 8) von übereinanderliegenden Abschnitten eines durchgehend mit der Katalysatorschüttung befüllten Reaktionsraums (12) gebildet sind.

## Claims

1. A reforming reactor for steam-reforming methanol, designed in two stages with a first reactor stage (7) at the inlet end and, directly adjoining it in the direction of gas flow, a second reactor stage (8) at the outlet end, the two reactor stages being disposed in a common reactor housing (1),
**characterised in that**
the two reactor stages (7, 8) are filled with a catalytic bed (13) end-to-end and only one of the two reactors cooperates with a heating medium used for heating purposes.

2. A reforming reactor as claimed in claim 1, also
**characterised in that**
the first reactor stage (7, 7') is left unheated and the second reactor stage (8) has a heat exchanger structure and is heated.

3. A reforming reactor as claimed in claim 1, also
**characterised in that**
the second reactor stage (17) is left unheated and the first reactor stage (16) is heated and has a heat exchanger structure.

4. A reforming reactor as claimed in claim 3, also
**characterised in that**
the ratio of the volume of the second reactor stage (17) to that of the first reactor stage (16) is selected on the basis of an intended operating temperature in the first reactor stage (16), such that the higher the intended operating temperature, the larger the chosen size.

5. A reforming reactor as claimed in one of claims 1 to 4, also
**characterised in that**
a catalyst-free gas inlet chamber (6) is connected upstream and/or a catalyst-free gas outlet chamber (9) is connected downstream of the two reactor stages (7, 8) in the common reactor housing (1).

6. A reforming reactor as claimed in one of claims 1 to 5, also
**characterised in that**
the two reactor stages (7, 8) are formed by oppositely lying sections of an end-to-end reaction chamber (12) filled with a catalytic bed.

## Revendications

1. Réacteur de reformage pour le reformage à la vapeur d'eau du méthanol, conçu en deux étages avec un premier étage de réacteur (7) situé côté entrée et un deuxième étage de réacteur (8) situé côté sortie, se raccordant directement à celui-ci dans la direction d'écoulement des gaz, les deux étages de réacteur étant logés dans un carter de réacteur (1) commun,
caractérisé en ce que les deux étages de réacteur (7, 8) sont remplis d'une masse en vrac de catalyseur (13) continue et des moyens de chauffage utilisés pour le chauffage étant associés à l'un seulement des deux étages de réacteur.

2. Réacteur de reformage selon la revendication 1, caractérisé en outre en ce que le premier étage de réacteur (7, 7') reste non chauffé et le deuxième étage de réacteur (8) comporte une structure de transfert de chaleur et est chauffé.

3. Réacteur de reformage selon la revendication 1, caractérisé en outre en ce que le deuxième étage de réacteur (17) reste non chauffé et le deuxième étage de réacteur (16) est chauffé et comporte une structure de transfert de chaleur.

4. Réacteur de reformage selon la revendication 3, caractérisé en outre en ce que le rapport entre le volume du deuxième étage de réacteur (17) et celui du premier étage de réacteur (16) est fixé pour une température de fonctionnement visée dans le premier étage de réacteur (16), en devenant plus gros lorsque la température de fonctionnement visée augmente.

5. Réacteur de reformage selon l'une des revendications 1 à 4, caractérisé en outre en ce que, en amont des deux étages de réacteur (7, 8), est montée dans le carter de réacteur (1) commun une enceinte d'introduction de gaz (6) exempte de catalyseur et/ou en aval est montée une enceinte d'échappement de gaz (9) exempte de catalyseur.

6. Réacteur de reformage selon l'une des revendications 1 à 5, caractérisé en outre en ce que les deux étages de réacteur (7, 8) sont constitués par des tronçons superposés d'une enceinte de réaction (12) remplie de façon continue par la masse en vrac de catalyseur.
